# EUROPEAN PATENT SPECIFICATION

(11) **EP 3 364 329 B1**
(45) Date of publication and mention of the grant of the patent: **26.07.2023**
(21) Application number: 17157273.8
(22) Date of filing: 21.02.2017
(51) Int. Cl.: G06Q 20/32, G06F 21/60

(54) **SECURITY ARCHITECTURE FOR DEVICE APPLICATIONS**
SICHERHEITSARCHITEKTUR FÜR VORRICHTUNGSANWENDUNGEN
ARCHITECTURE DE SÉCURITÉ POUR DES APPLICATIONS DE DISPOSITIF

(43) Date of publication of application: 22.08.2018
(73) Proprietor: Mastercard International Incorporated, Purchase NY 10577 (US)
(72) Inventor: ABOU EL ENIN, Mohamed, 1160 Brussels (BE); SMETS, Patrik, 2560 Nijlen (BE); WARD, Michael, Taunton, Somerset TA4 2JB (GB); ROBERTS, David Anthony, Warrington, Cheshire WA4 5RD (GB)
(74) Representative: Lawrence, Richard Anthony

(56) References cited:
- EP-A1- 2 945 410
- WO-A1-2015/160385

## Description

### TECHNICAL FIELD

The invention relates to a security architecture for applications performed on a computing device. In embodiments, it relates to mobile application security, and to use of sensitive assets with mobile applications, in particular embodiments for mobile payment applications.

### BACKGROUND

Smart devices and smartphones are becoming more commonplace, with global smartphone sales increasing from under 200 million in 2009 to over 1,300 million in 2015. Improvements in mobile and communication technologies have also allowed for new and alternative uses of smart devices and smartphones. One example is the development of near field communication (NFC) technology and its use in contactless payment transactions. Many smartphones and credit and debit cards (typically known as "EMV cards" if in compliance with the standards developed by EMVCo with the support of major card providers) are now equipped with NFC chips enabled to securely transmit payment details so a user may only 'touch' or `tap' the phone or card to a point of sale terminal to process a payment transaction.

Previously, using NFC communication for payment transactions required devices to have secure element (SE) chips, which are used to securely store the payment credentials. This is certainly suitable for an EMV card produced by an issuer, such as the user's bank, as the issuer can use their preferred platform in the SE chip. However, in the case of mobile devices, one SE must be used by any number of issuers which creates issues around ownership and access. Additionally, some mobile devices may not have secure elements. Consequently, a mobile device which is otherwise equipped for contactless payments or remote payments will not be able to enact such transactions.

An alternative to providing secure elements for payment transactions in mobile devices is to use a trusted execution environment (TEE) - this is an isolated execution environment provided by the main processor of the mobile device adapted so that code and data loaded within it is segregated from the main operating system. The TEE operates in parallel to the main operating system (sometimes termed a rich execution environment or REE) of the mobile device, and processing certain aspects of a payment transaction in the TEE provides added security, for instance because the code is integrity protected.

However, storing credentials outside of a SE requires alternative approaches to securing credentials for payment transactions. For example, the permanent card number (PAN) is typically stored locally in the mobile application which, although convenient, is not secure, so this data element is often 'tokenised', replacing the PAN with a non-sensitive value and introducing domain restrictions, allowing this value only to be used under specific conditions. Another example is the creation and transfer of single use transaction keys from a remote secure data store, rather than using the account-level key at the mobile device. A single use transaction key enables the mobile application to perform only a single transaction while an account-level key would allow it to make numerous transactions.

The effective use and management of cryptographic keys is important for transaction systems generally, and these are particularly relevant where the card or user credentials are stored other than in an SE - solutions are discussed, for example in the applicant's earlier WO2015/084755 and EP2945410A1. EP2945410A1 describes an augmented FIDO authentication structure for passing keys to a mobile device with a small trusted execution environment. The trusted execution environment contains a trust client which establishes a trust relationship with a remote client. FIDO is a known authentication technology, and authentication of the user at the mobile device (for example through a biometric reader) is here used to enable operation of the trust client to provide data items - such as keys - obtained or derived from remote server provided information to an application in the mobile device. Even with such solutions available, management and use of cryptographic keys in transaction systems may be particularly challenging when the mobile device needs to operate in an offline mode as well as an online mode. It is desirable for a user to be able to make safe and effective transactions as far as possible in an offline environment, even when external system elements are not available.

### SUMMARY OF THE INVENTION

In a first aspect, the invention provides a computing device employing a security architecture for a payment application, the security architecture comprising using non-volatile storage of the computing device for storing first cryptographic material and using volatile storage of the computing device for storing second cryptographic material: wherein the non-volatile storage comprises keystores provided by an operating system of the computing device, and the first cryptographic material comprises cryptographic keys; wherein the second cryptographic material comprises encrypted volatile integers generated for one time use; wherein the second cryptographic material is lost on rebooting of the computing device and the computing device is adapted to request one or more volatile integers on reboot of the device; and wherein the payment application is adapted to generate an application cryptogram for a transaction performed using the computing device, wherein the first cryptographic material is used in generation of the application cryptogram and a volatile integer of said volatile integers is also used in generation of the application cryptogram if one is available, wherein on receipt of the application cryptogram it can be determined whether a volatile integer was used in generation of the application cryptogram.

This approach allows for a flexible approach which allows the application to be used in a wide variety of situations, while providing effective protection against subversion or attack.

In one arrangement, the security architecture is adapted such that at least the second cryptographic material is replenished from a source external to the computing device but accessible by a computing network, wherein the application is adapted to perform an action using the first cryptographic material and, if available, the second cryptographic material, wherein an output of the action indicates whether the second cryptographic material was available.

As the second cryptographic material is lost on reboot, this approach allows for effective defence against rooting attacks, as these require a reboot to complete.

In another arrangement, the security architecture is adapted such that the first cryptographic material comprises a first and a second part, wherein the application is adapted to perform an action using the first cryptographic material, wherein the second part of the first cryptographic material is only used if a use condition is met, wherein if the use condition is not met, only the first part of the cryptographic material is used, wherein an output of the action indicates which parts of the first cryptographic material were used.

When taking this approach, the security architecture may provide for verification of a user at the mobile computing device. If so, the first cryptographic material may comprise completed verification material and uncompleted verification material, and wherein the action uses the completed verification material if the user was verified at the mobile computing device and uses the uncompleted verification material if the user was not verified at the mobile computing device. This completed verification material may be cryptographically generated by a keystore provided by an operating system of the computing device, and wherein the keystore may be configured to only perform cryptographic operations after successful user verification.

This approach preserves usability of the application, while allowing other parties (such as an issuer for a transaction application) to make an effective determination of risk associated with the use case.

The non-volatile storage may comprise keystores provided by an operating system of the computing device, and the first cryptographic material may comprise cryptographic keys. The cryptographic keys may comprise one or more of one or more single use keys and a long term use key.

In this configuration, when performing an action using first cryptographic material, the application uses one of the single use keys, if available, but uses the long term use key if no single use key is available. In this case, if a long term use key is used in performance of the action, the output of the action may indicate that the long term use key was used.

Where this configuration is used, the security architecture may be adapted to use cryptographic keys only when injection into the keystores was completed within a predetermined time.

The second cryptographic material may comprise encrypted volatile integers generated for one time use. If so, the computing device may be adapted to request one or more volatile integers on reboot of the device.

In embodiments, the computing device is a mobile computing device. The application for execution on the mobile computing device may be a payment application, and the action may comprise generation of a cryptogram in performance of a transaction.

In a second aspect, the invention provides a method of preparing and performing an application on a computing device having non-volatile storage and volatile storage, the method comprising: storing first cryptographic material in the non-volatile storage and storing second cryptographic material in the volatile storage, wherein the second cryptographic material comprises encrypted volatile integers and is lost on rebooting of the computing device; replenishing at least the second cryptographic material from a source external to the computing device but accessible by a computing network; and the application generating an application cryptogram for a transaction performed using the computing device, wherein the first cryptographic material is used in generation of the application cryptogram and a volatile integer of said volatile integers is also used in generation of the application cryptogram if one is available, wherein on receipt of the application cryptogram it can be determined whether a volatile integer was used in generation of the application cryptogram.

In non-limiting examples, there is provided a method of preparing and performing an application on a computing device having non-volatile storage and volatile storage, the method comprising: storing first cryptographic material in the non-volatile storage and storing second cryptographic material in the volatile storage, wherein the second cryptographic material is lost on rebooting of the computing device, and wherein the first cryptographic material comprises a first and a second part; the application performing an action using the first cryptographic material, wherein the first part of the cryptographic material is used to perform the action and the second part of the cryptographic material is also used to perform the action if a use condition is met, wherein an output of the action indicates which parts of the first cryptographic material were used.

### BRIEF DESCRIPTION OF THE DRAWINGS

The scope of the present disclosure is best understood from the following detailed description of the exemplary embodiments when read in conjunction with the accompanying drawings. Included in the drawings are the following figures:
Figure 1 shows schematically relevant parts of a representative transaction system suitable for implementing an embodiment of the disclosure;
Figure 2 shows functional elements of a mobile payment infrastructure suitable for use with embodiments of the invention;
Figures 3a, 3b and 3c show different computing environments for running a mobile payment application in a mobile device in the infrastructure of Figure 2;
Figure 4 shows interaction of a mobile payment application with a suitable operating environment for carrying out embodiments of the invention;
Figure 5 shows a security architecture for the arrangement of Figure 4;
Figure 6 shows an exemplary arrangement of keystores for the security architecture of Figure 5;
Figure 7 shows an exemplary process of key injection for use with the security architecture of Figure 5; and
Figure 8 shows an exemplary organisation of keys for the security architecture of Figure 5;
Figures 9A and 9B shows exemplary key exchange and key injection code for the security architecture of Figure 5;
Figures 10A and 10B show respectively Byte 1 and Byte 2 CDCVM data in an exemplary embodiment for M/Chip; and
Figure 11 shows CDCVM data in an exemplary embodiment for MagStripe.

### DETAILED DESCRIPTION

Specific embodiments of the invention will be described below with reference to the Figures.

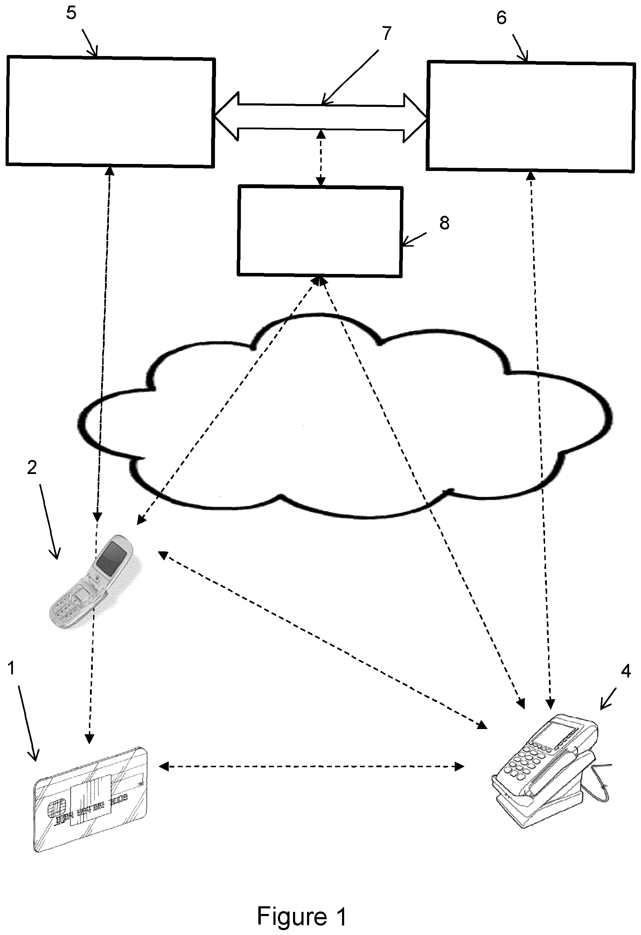

Figure 1 shows schematically relevant parts of a representative transaction system suitable for implementing an embodiment of the disclosure.

A user (not shown) is provided with a payment device - in the embodiment shown, this is a mobile phone or other mobile computing device ("mobile device") 2 acting as a proxy for a payment card 1 (the proxy can be for a physical card, or the payment card may be virtual only - either will be referred to below as a "digitized card") through use of a payment application. In other embodiments, other types of computing device may be used as the payment device. Such computing devices will have processors and memories for storing information including firmware and applications run by the respective processors, in this case one of the applications being a payment application. Payment devices will typically be equipped with means to communicate with other elements of a payment infrastructure. These communication means may comprise antennae and associated hardware and software to enable communication by NFC and associated contactless card protocols such as those defined under ISO/IEC 14443, or they may comprise an antenna and associated hardware and software to allow local wireless networking using 802.11 protocols or any appropriate alternative.

Other computer equipment in a conventional infrastructure is typically fixed, but in cases of interest point of interaction (POI) terminals 4 may also be mobile. The example shown is a mobile point-of-sale (MPOS) terminal used by a merchant interacting with the user. Such equipment is typically connected or connectable to an acquiring bank 6 or other system in a secure way (either through a dedicated channel or through a secure communication mechanism over a public or insecure channel). There may also be a mechanism to allow connection between the user computer devices and a card issuing bank 5 or system associated with the user. A banking infrastructure 7 will also connect the card issuer 5 and the acquiring bank 6, allowing transactions to be carried out between them.

Associated with the banking infrastructure 7 there are also one or more infrastructure servers 8 (while represented here as a single server, this may of course comprise any appropriate computer system or set of computer systems). The infrastructure server 8 may be considered a part of the banking infrastructure 7 - it is either integral with it or bound to it in a close trust relationship, so that the banking infrastructure 7 can effectively warrant that communications by other parties with the infrastructure server 8 can be trusted. This means that if the other party trusts the banking infrastructure 7, then the other party should also trust the infrastructure server 8. The infrastructure server 8 is shown as interacting with both the user mobile phone 2 and other elements of the banking infrastructure.

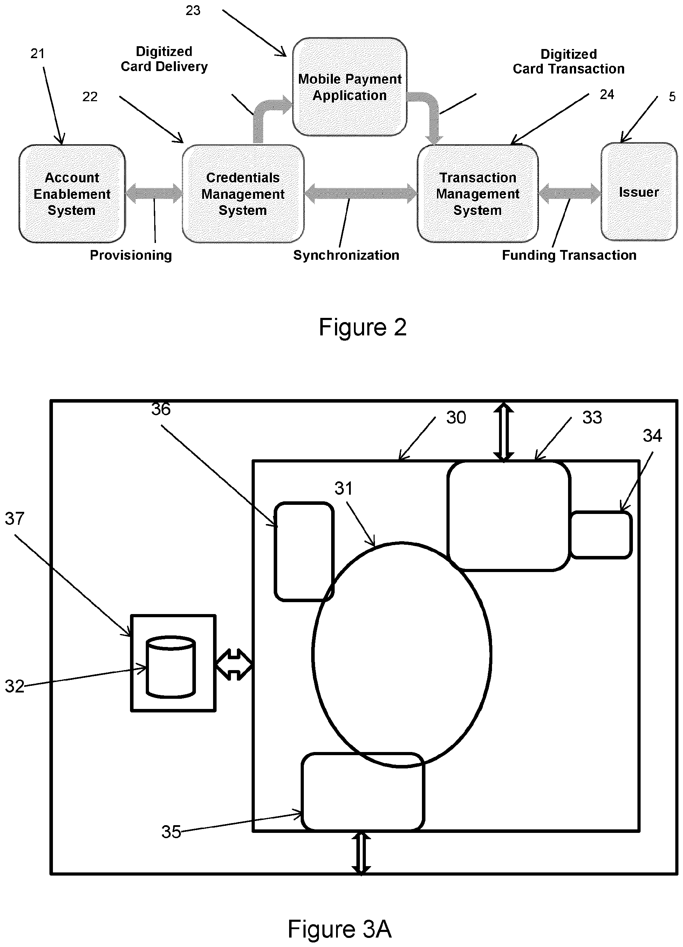

Figure 2 shows in more detail the functional roles assumed by system components in an exemplary internet supported ("cloud based") infrastructure for mobile payments using a digitized card. These functional roles are described below.

The Account Enablement System (AEnS) 21 may be provided by the card issuer or by a service associated with the card issuer. The AEnS 21 is responsible for card setup and establishment of the user and card on the system - it is responsible for the user (cardholder) onboarding process, the cardholder identification and verification process (ID&V) and the card digitization process.

The Credentials Management System (CMS) 22 is responsible for remote management of the Mobile Payment Application (MPA) 23. This encompasses the delivery of payment credentials such as card profiles and keys necessary to support transactions. It also covers remote management functions that can be triggered internally or by other system elements. The CMS 22 also has responsibility for replenishment of the MPA 23 (for example, to ensure that it has a sufficient supply of single-use keys to allow it to continue to perform payment transactions).

The Transaction Management System (TMS) 24 is provided by the elements of the transaction infrastructure together responsible for the analysis and subsequent approval of a transaction using a digitized card. The TMS 24 interacts with the issuer 5 for the financial part of the authorization process in the same manner as for a conventional transaction infrastructure, the issuer being responsible for the approval of a transaction.

The MPA 23 enables a user to interact with a digitized card, both for card management and to perform a contactless transaction at a POS terminal or a remote payment transaction using the network connectivity of the mobile device on which the MPA is installed. Payment credentials are received in digitized form and are stored encrypted on the mobile device.

There is a synchronization link between the CMS 22 and the TMS 24 to monitor transactions performed over the system. This link can also be used to support fraud detection and potentially stop a digitized card from further transacting.

As noted, the mobile device 2 may be any type of mobile computing device which can execute the required functions for performing a transaction. The mobile device may or may not comprise a secure element, which may be employed for additional security even where not used for key management. The mobile device may be a smart phone, wearable smart device or mobile computer such as a tablet. The mobile payment application 23 is downloaded and run on the mobile device 2. The mobile payment application 23 may be provided by the issuer 5, or alternatively may be provided by a third party. As noted, it is possible that the mobile device 2 may comprise a number of mobile payment applications 23, all of which are in communication with a secure memory area (as discussed below). In this way the user of the mobile device 2 may select the mobile payment application 23 most suitable for a particular transaction. In addition, the mobile payment application 23 may store information associated with the user or user account, for example the user billing address and a tokenised primary account number (PAN). Furthermore, in an arrangement of the invention, the mobile payment application 23 may store an Application Transaction Counter (ATC) which has a value associated with each single use transaction key - this provides a unique reference to each transaction which is initiated on the mobile device 2. As a further extension of this arrangement, the mobile payment application 23 may maintain its Application Transaction Counter (ATC) for use if it runs out of single use transaction keys and associated ATC values.

The mobile payment application 23 is in bi-directional communication with the CMS 24, and may use multiple communication channels, such as dual channel communication which increases the security of data transmission and ensures the data is delivered to the intended device.

The TMS 24 may comprise receiving and transmitting units, a processor, account database, and a memory storage unit. The TMS 24 may be configured to process authorization requests using received and stored data and perform functions, such as fraud analysis and cryptogram validation. The TMS 24 may be configured to store received data associated with a user account, including keys, transaction data or personal information, in the account database, and recall data from the account database. The account database is configured to store information for a plurality of user accounts.

The issuer 5 may be an institution, typically a financial institution such as a bank, which issues payment credentials to a consumer associated with a transaction account registered with the institution. The issuer 5 comprises at least an Issuer server to perform the actions required for processing a payment transaction as recited herein. It is to be understood that this is not limiting, and the issuer server may also perform a number of additional actions not required for the payment transaction recited herein, or for alternative possible embodiments of transactions, including cloud-based transactionsThe issuer 5 may supply payment credentials to the TMS 24 or CMS 22. The issuer server may also comprise a user account database, in which user and user device information, data and payment transaction information is stored. This may be in addition to the account database on the TMS 24, or the two may be combined together in the TMS 24.

The CMS 22 is adapted to perform various functions including those required for generating single use transaction keys, as will be discussed further. The CMS 22 may comprise receiving and transmitting units, a processor and a memory storage unit. The CMS 22 may be configured to securely store payment credentials and cryptographic keys, and provide these to the TMS 24 when required. Alternatively, the TMS 24 may receive relevant secure material directly from an account enablement system (AEnS). The CMS 22 also securely communicates payment credentials and cryptographic keys directly to a secure memory area such as a mobile keystore, as discussed further below.

The TMS 24, the issuer server and the CMS 22 may all be implemented as one or multiple computing devices provisioned via hardware and software to perform relevant functions, including cryptographic functions, as described generally above and in more detail below. The TMS 24, the issuer server and the CMS 22 may communicate with each other (and where appropriate the mobile payment application) through appropriate, and potentially multiple, communication channels. Payment credentials may include any data or information relating to and/or used in a payment transaction, and may include cryptograms, cryptographic keys and notification messages, with examples being the primary account number (PAN), the card security code (CSC) and the card expiration date.

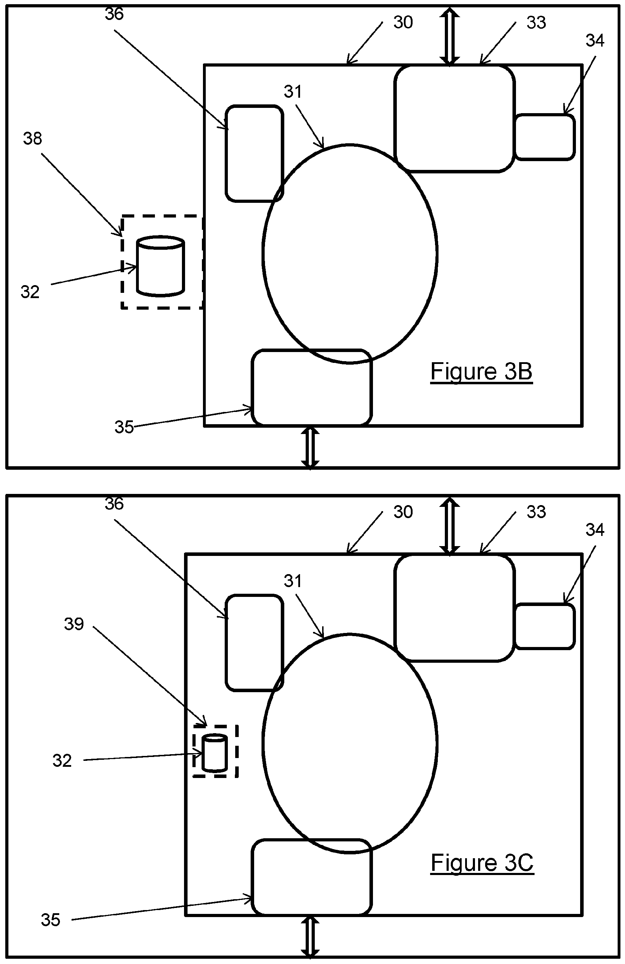

The mobile payment application (MPA) as shown in Figure 2 is illustrated functionally in Figures 3a, 3b and 3c, which illustrate alternative computing environments for implementing embodiments of the invention. These computing environments are provided by suitable software stored in a memory of the mobile device and executed by a processor of the mobile device with associated hardware.

The central business logic 31 is responsible for the overall management of the digitized card. Sensitive data may be stored in a secure memory area 32 either in a secure element (SE) 37 (Figure 3a) or a Trusted Execution Environment 38 (Figure 3b), or it may be implemented as a trusted structure such as keystore 39 maintained within the main operating environment 30 (Figure 3c). Core payment functions 33 are here provided by appropriate software, with a payment capabilities library 34 also provided by the mobile application to support remote payment.

The MPA stores single usage payment credentials locally, allowing it to conduct contactless transactions without need for connectivity to the CMS at time of the transaction. The MPA does have a remote management system 35 for communication with the CMS when management is required, and also supports the business logic of the MPA to answer any callback request from the CMS. Such interaction of course requires appropriate network connectivity. The user experience 36 comprises the user interface.

The MPA may be one of several payment applications on the mobile device - these payment applications may share a common secure memory area, or each may have a secure memory area of its own. Each MPA is adapted to perform a transaction with another party (for example, a contactless transaction with a POS terminal or a vending machine), preferably according to a relevant EMVCo specification, providing an industry standard. Relevant standards are found at https://www.emvco.com/specifications.aspx - for example, the contactless transaction standard is found at https://www.emvco.com/specifications.aspx?id=21. In performing the transaction, the MPA will need to generate at least one cryptogram during card action analysis (see https://en.wikipedia.org/wiki/EMV#First_card_action_analysis). Cryptograms for different purposes will typically contain or protect different content, but will contain or protect transaction details and credentials of relevant parties (or an indication that such credentials were used), all protected for integrity and authenticity with an appropriate key. For the general approach to creation of cryptograms in accordance with EMV standards and their use, the skilled person will refer to the standards found at https://www.emvco.com/specifications.aspx and to materials relating to cryptogram creation in accordance with these standards, and cryptogram creation and use will not be discussed in detail here. More discussion of cryptogram creation relevant to this architecture may be found in the applicant's copending application of even date entitled "Transaction Cryptogram", the contents of which are incorporated by reference to the extent permissible under applicable law. The present disclosure relates generally to risk management in use of keys, and of indication of factors applying to a transaction relevant to the assessment of risk.

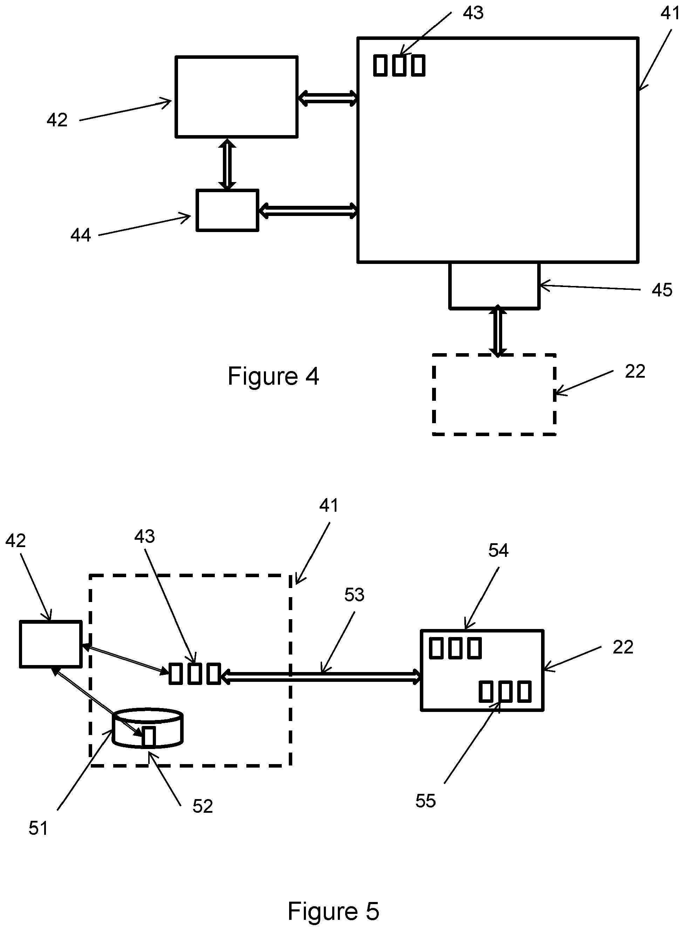

Interaction of an MPA with a suitable operating environment for carrying out embodiments of the invention is shown in Figure 4, with a corresponding security architecture shown in Figure 5. In the arrangement of Figure 4, Android is used as the operating system and certain specific features are described using Android terminology. The skilled person will appreciate that equivalent functionalities provided in or with other operating systems may be used or adapted for use in similar ways.

Figure 4 shows an MPA 42 interacting with an Android operating environment 41, in this case Android 'M' (Marshmallow) or later. This generation of Android supports symmetric key cryptography and its use with keystores. Figure 4 illustrates certain features provided by Android M that are used in the security architecture of Figure 5. The Android operating environment 41 is able to provide keystores 43 for use by applications - multiple keystore instances may be provided in one operating environment, or for a single application. A keystore (discussed for example at https://developer.android.com/training/articles/keystore.html) is a container for cryptographic keys that allows the keys to be used without the keys themselves being readily exportable.

Figure 4 also shows a biometric application 44 interacting with the MPA 42. The Android operating environment also supports functions required by a biometric application - for example, FingerprintManager is provided as an API to support user authentication with fingerprint scanning (see https://developer.android.com/about/versions/marshmallow/android-6.0.html). In addition, the MPA 42 has access to a communications interface 45 to allow it to make connection to other elements in the transaction network - for the security architecture and the replenishment of keys and management of credentials, the connection to the CMS is particularly significant.

Figure 5 illustrates the basic security architecture of the system. The MPA 42 has access to a plurality of keystores 43 (as discussed in greater detail below), each holding one or more keys used by the MPA 42. These keystores 43 are non-volatile and will so preserve state on power down - injection of keys into keystores will be described in greater detail below. Additional cryptographic material 52 may be stored in volatile memory 51 (in which case it will need to be replenished on reboot or power cycling), but will be protected under appropriate keys (wrapper keys) as discussed below. A secure channel 53 will be made when needed and when possible to allow the CMS to connect with the MPA 42 for management of credentials, and to manage keys in the keystore (in particular, for the replenishment of one time keys). The CMS comprises keys 54 (with the capability to create new keys for the keystores 43 used by the MPA 42) and credential material 55 for the MPA 42.

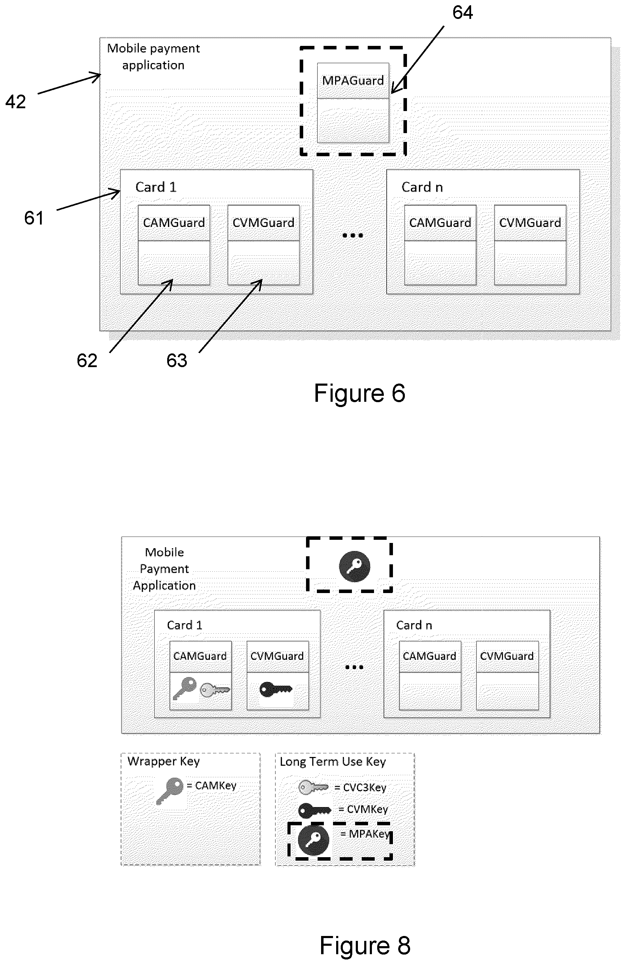

An exemplary arrangement of keystores for an MPA is shown in Figure 6. The MPA 42 may represent a number of cards 61 (either virtual cards or proxies for physical cards) that have been digitized into the MPA 42, and two keystores are provided for each card 61, here termed CAMGuard 62 and CVMGuard 63. The two keystores are used as the MPA 42 is adapted to function in two different transaction regimes. Mobile payment applications for consumer devices typically employ one or more type of Consumer Device Cardholder Verification Method (CDCVM) supported by the device and permitted by the transaction network - use of CDCVM in accordance with EMV protocols is discussed further below (including in the Appendices), and relevant keystore implementation is discussed in https://developer.android.com/training/articles/keystore.html. Typical CDCVM types are a PIN and a user biometric. In this arrangement, certain cryptographic material can only be accessed after successful CDCVM - CDCVM may therefore be necessary for a higher value transaction, for example. In this case, the material that can only be accessed conditional upon CDCVM is protected by CVMGuard 63, with the material that is not conditional on CDCVM is protected by CAMGuard 62. In embodiments, a master instance of keystore, MPAGuard 64, may also be provided - both arrangements which do and do not use MPAGuard 64 are discussed below.

As discussed in the EMV specifications identified above, a transaction involves the creation of an Application Cryptogram (AC) by the card (or mobile payment application acting on behalf of a card) as a part of the transaction process. The AC may be constructed differently depending on the nature of the transaction, but is important to show that the transaction is properly formed and legitimate, and it provides information to allow the card issuer to make an authorisation decision and may be used in clearing. Cryptographic and other material used in the transaction process, and in particular in generation of the AC, in the security model used in embodiments described here is indicated in Table 1 below.

**Table 1**

| | |
|---|---|
| Wrapper key (WK) | This is a key provided by the CMS. It is injected into the appropriate KeyStore and is then used to encrypt/decrypt other cryptographic material linked to a Card. |
| | A WK is derived from a CMS Master Key. It may have the Mobile Payment Application ID and (conditionally) the Card ID as diversifier. |
| One-time-use key (OTUK) | These are keys provided by the CMS. They are each used once by the Mobile Payment Application to create an application cryptogram. The MPA takes this approach as long as an OTUK key is available. If the Mobile Payment Application runs out of this type of key, it reverts to a Long-term-use-key or, alternatively, it stops transacting. |
| | One-time-use keys are session keys that are derived from an Issuer Master Key to a Card Master Key using the PAN as diversifier, and are then further derived to a session key using the Application Transaction Counter. |
| | OTUKs are typically stored encrypted with a WK. It would also be possible to store OTUKs directly in the appropriate KeyStore having removed the WK encipherment following delivery from the CMS and subsequently use them to generate cryptograms; this is the way that long term keys are used. |
| Volatile Integer (VI) | These are CMS provided values that are used once by the Mobile Payment Application. Each VI value is cryptographically bound to an ATC. Once decrypted, the VI is used to calculate the MAC (Message Authentication Code) for card authentication. The encrypted Vls are stored in volatile memory. |
| Long-term-use key (LTUK) | The CMS provides these keys, which are used over a period of time by the Mobile Payment Application to create an AC or to calculate input to the AC. |
| | Long-term-use keys are Card Master Keys derived from an Issuer Master Key using the PAN as diversifier. An LTUK is injected into KeyStore. |
| Application Transaction Counter (ATC) | This is a counter managed at Card level by the Mobile Payment Application. It is initialized at zero when the Card is created and it increments by 1 each time a transaction is initiated. |

A typical transaction process will be described briefly below to provide context for the security architecture described in embodiments - further details may be found in additional materials discussed elsewhere in this specification. The CMS provides the MPA with keys (typically one time use keys) for use in a session (typically a transaction) - these are replenished when necessary and when there is a connection between the CMS and the mobile device. This material is held in an appropriate secure manner, as discussed below with reference to embodiments, and may require user authentication to release for use by the MPA. The mobile payment application then uses this material to produce an application cryptogram (AC), actings as a form of message authentication code for transaction information. The authenticity of the transaction message is thus protected by a key which is known only to the sender and recipient. In this case, the approach taken allows determination of message contents by TMS or issuer as necessary. On receiving the AC from the sender, the recipient performs a validation/authentication process in which key material is used to re-compute the AC. If the AC received from the mobile device matches the transaction cryptogram generated by the recipient, the recipient may be assured that the message has not been altered during transmission.

It should be noted that there are two key types that can potentially be used in creation of an application cryptogram - the OTUK and the LTUK. The normal approach will be to use a OTUK, but this will only be possible if the mobile device either has OTUKs present or if it replenish its supply from the CMS. The LTUK acts as a fallback if for any reason this is not possible, though it may be a consideration in the processing of the transaction that the LTUK has been used and not an OTUK. As discussed below, the key exchange and key injection approaches used in embodiments of the invention may be used for a LTUK or for OTUKs, but the circumstances in which keys will be injected will differ - OTUKs will be provided when the mobile device has or will shortly run out, whereas the LTUK will be refreshed in accordance with appropriate key refresh criteria (such as overall period of use or number of times that the payment application has been used).

In embodiments described here, key exchange and key injection involve cooperation between the CMS and the KeyStore. In specific arrangements, where a common symmetric key between the mobile application and the CMS is needed, this symmetric key may be generated by CMS and encrypted under a public key generated by KeyStore.

The approach taken to key injection will depend on the operating system - from Android 'O' onwards, secure injection into (and export from) KeyStore will be possible, but before then a pragmatic approach to risk management needs to be employed. The risk may be mitigated by the design and implementation of the mobile payment application and the CMS processing, for example by ensuring that the CMS may only use the key when it is clear that elapsed time between decryption and injection is very small (by a check of the form 'elapsed time < allowed time'). If this is not the case, then the process must be repeated with a fresh key.

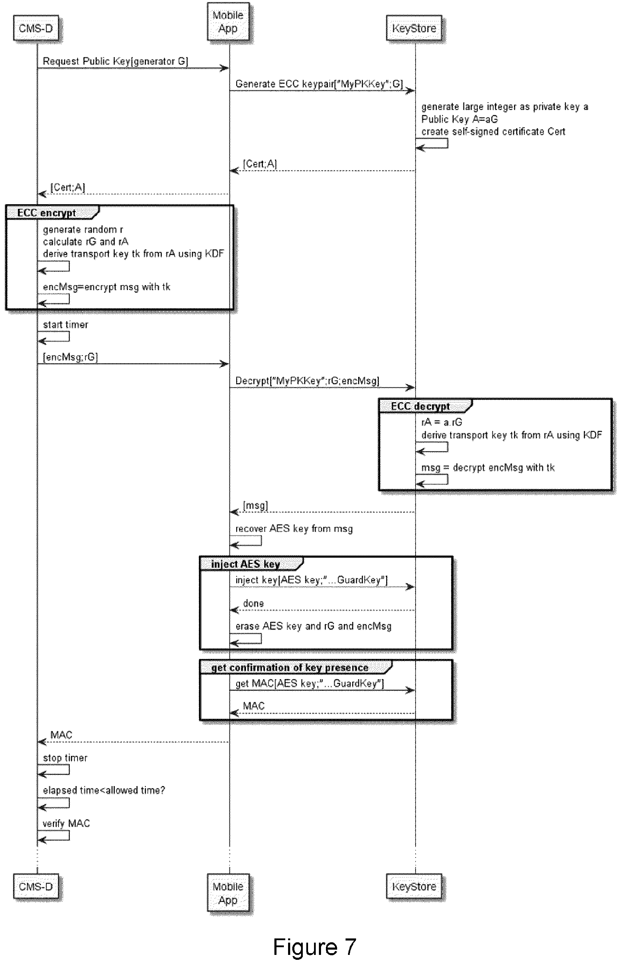

Exemplary code for this process is shown in Appendix A, with a message flow shown in Figure 7.

As noted above, in the arrangement shown in embodiments some cryptographic material used by the MPA will be held in non-volatile memory, and some in volatile memory. As KeyStore uses non-volatile memory, cryptographic material that is stored in KeyStore survives power-down and reboot. However, this also means that there is some potential for unauthorized use if the device is rooted.

However, some cryptographic material in such arrangements is stored outside of KeyStore, protected under a Wrapper Key managed by KeyStore. As a result of being stored in RAM, this material will be erased upon power-down - which may occur after rooting or may simply be an overnight power-down. In embodiments, re-provisioning of this material is conditional to successfully passing remote attestation, using Google's SafetyNet Device Compatibility check. Re-provisioning may not always be done in a timely fashion if there is a lack of of data connectivity (for instance, roaming) - hence it is desirable to provide a fallback scenario allowing some use of the MPA before re-provisioning is able to take place.

In the embodiment shown in Figure 8, there is one 'master' AES key and three card-specific AES keys. All keys are injected into an instance of KeyStore. They are placed into the Keystore using the key injection protocol above and if the injection fails because of either a MAC or a timing failure the key is discarded without being used and a new one generated. As noted above, the use of a 'master' AES key is optional. This arrangement is summarised in Table 2 below.

**Table 2**

| **Name** | **Type** | **Location** | **Purpose** |
|---|---|---|---|
| *MPAKey* | *WK* | *MPAGuard* | *This 'master' key is injected into MPAGuard to protect cryptographic material on top of the protection provided by CAMGuard and CVMGuard (so double encryption).* |
| CAMKey | WK | CAMGuard | This card specific key is injected in CAMGuard and is used to decrypt the OTUKs and Vis used to calculate the application cryptogram (ARQC) for card authentication. |
| CVC3Key | LTUK | CAMGuard | This card specific key is specific to contactless magstripe and used for calculating dCVC3 in combination with an ATC. It is also for contactless M/Chip transactions if OTUKs have been depleted. |
| CVMKey | LTUK | CVMGuard | This card specific key is injected into CVMGuard for the purpose of (proving) CDCVM. When CDCVM is performed, CVMGuard generates a CDN using this key in combination with an ATC. |

Once all keys are injected, then the organization of the different (AES) keys is as shown in Figure 8. Note that the public keys generated and used by the different instances of KeyStore for the symmetric key exchange are NOT illustrated. As mentioned earlier, the injection of these keys should be time bound, with attestation used before and after. If any problems are noted, the key should be discarded and the process rerun with fresh keys.

In embodiments using the MPAKey, an arrangement may be used that uses creation of a dependency between keys that are injected at different times: the MPAKey key may be injected into MPAGuard at instantiation and activation of the mobile payment application, with card specific keys injected in CAMGuard and CVMGuard at time of card digitization.

As has been stated previously, cryptograms will typically contain or protect different content. In this case the cryptogram may include CDN or VI, in addition to other data. The purpose of CDN and VI is different.

The VIs, as has been stated previously, are encrypted by the CMS with its copy of the CAM Key. This card specific key is injected in CAMGuard and is used to decrypt the OTUKs and Vis used to calculate the application cryptogram for card authentication. As VI is volatile, it is erased at power down. As it is necessary to power down to root a device, VI is a protection/detection tool for device rooting. Availability of VI is not conditioned by successful cardholder verification.

Both M/Chip and contactless magstripe include a CDN in the cryptogram calculation as evidence of CDCVM. The CDN (Consumer Device Cardholder Verification Method Dynamic Number) is created from material held in a keystore (specifically the CVMKey injected into CVMGuard for this purpose) in combination with an ATC and released on successful verification. By contrast with CAM Key, the CVM Key is conditioned by successful CDCVM. The keystore will only calculate a fresh CDN (for an ATC) when CDCVM is successful and only for the application that put the CVM Key in. Similar to the CVM Key, the CAMKey is non-volatile. Relevant discussion may be found in the applicant's copending application of even date entitled "Transaction Cryptogram"

The functionality of this arrangement (described here without MPAKey) for different transaction types is set out below. Two transaction types are discussed: M/Chip (MasterCard's proprietary EMV solution for a chip on a payment card) and Contactless MagStripe (used particularly in the US to enable contactless transactions using data from magnetic stripe protocols).

The Application Transaction Counter (ATC) is a common element between M/Chip and Contactless MagStripe solutions. Both M/Chip and contactless magstripe use an ATC as input for the Application Cryptogram. If OTUKs are available - with each OTUK linked to an ATC - then the (lowest) ATC from the OTUKs is used, and subsequently this OTUK is invalidated. If no OTUK is available, the application takes the ATC of the last OTUK and increments it by 1 for each transaction. When the CMS eventually makes contact again, the mobile payment application informs the CMS of the latest ATC it used. The CMS will start delivering new OTUKs from the point that the mobile had reached in its ATC usage.

M/Chip implementation - M/Chip is issued with OTUKs and Vls for the application cryptogram and Issuer Dynamic Numbers for inclusion in the CDA signature and for RRP (Relay Resistance Protocol). CDA (Combined DDA/generate application cryptogram) is a cryptographic card validation check in which dynamic data authentication (DDA) is combined with generation of the application cryptogram (this is described in further detail in EMV standards).

For example, starting with ATC=1:
• {1, OTUK_CL1, OTUK_RP1, IDN1, VI1 }
• ...
• ...
• {n, OTUK_CLn, OTUK_RPn, IDNn, Vln}

Every time an M/Chip transaction is initiated, an OTUK and VI is decrypted and used for calculating the application cryptogram. The ATC value is available in clear. If the transaction is completed using CDCVM, then a CDN value is calculated using the same ATC as the transaction. If no successful CDCVM was performed, the CDN is absent from the cryptogram input. The inclusion/exclusion of CDN is indicated by a bit in the Additional Authentication Data.

When the device reboots and VI-values have been erased, VI is absent from the cryptogram input. The OTUKs survive the reboot as they are stored in permanent memory. The inclusion/exclusion of VI is indicated by a bit in the Additional Authentication Data so that the TMS can adjust its cryptographic processing and raise the necessary flags in its fraud detection engine. The lack of VI also triggers the mobile to contact the CMS to initiate remote attestation and request re-provisioning of OTUKs and Vls.

Until the OTUKs and Vls are delivered, the mobile application continues to use the available OTUKs for contactless transactions, but without VI. Remote transactions are not allowed without VI. Note that CVN (Cryptogram Version Number - from which the relevant process steps can be inferred) indicates the use of session keys as long as the mobile application uses OTUKs - with or without VI.

If the mobile application runs out of OTUKs, it uses an LTUK Key instead. For each transaction with this LTUK Key, the ATC is incremented. The switching from OTUKs to an LTUK is indicated by CVN, so that again the TMS can adjust its cryptographic processing and raise additional flags in the fraud detection engine. When an LTUK is used, CVN indicates 'No Session Key Derivation'.

In alternative arrangements, M/Chip implementations may use LTUKs instead of OTUKs. To allow rotation of LTUKs that are derived from the same IMK, a new data object may be introduced, termed Card Derivation Counter (CDC). This may be an incrementing counter, allowing for 256 rotations using the same IMK.

Contactless MagStripe implementation - In this case, the application cryptogram is calculated using the LTUK CVC3Key, which is the same approach as used in existing contactless magstripe solutions. No OTUKs or Vls are used - one factor in this is that for a contactless magstripe solution, there is minimal space available for additional data, and so no space to signal the different options to the TMS.

The TMS will need to know the option taken for calculating the cryptogram - this is summarised in Table 3 below.

**Table 3**

| **Authorization data** | **VI (CVN indicates CSK)** | **LTUK (CVN indicates NSK)** | **CDN** |
|---|---|---|---|
| Remote | Always included | n.a. | Additional Authentication Data |
| Contactless M/Chip | Additional Authentication Data | CVN indicates NSK | |
| Contactless MagStripe | Not used | Always (CDC = 0) | CDCVM Info (1 digit) |

As illustrated above, different mechanisms can used to signal to the TMS that a VI and/or CDN is included in the Application Cryptogram and whether an OTUK or an LTUK is used. One mechanism uses different values of the Cryptogram Version Number (CVN), in the table above used to distinguish OTUK from LTUK. Another mechanism is the Additional Authentication Data to indicate inclusion/exclusion of VI and/or CDN in the Application Cryptogram. The inclusion or exclusion of CDN is indicated by CDCVM Info that is included in the Additional Authentication Data for M/Chip and that is limited to a 1 digit value in the Track DD for contactless magstripe.

Through information in the authorization request, for instance in the Additional Authentication Data (that are included in the Issuer Application Data) and the CDCVM information, the issuer host is informed about the trustworthiness of the keys or to the effectiveness of the sandboxing of the payment application itself. These are discussed further below, with reference to the exemplary CDCVM information and codebook provided as Appendix B and the discussion of obtainable information relating to the integrity of a computing environment (particularly an Android computing environment) provided in Appendix C.

Sandboxing may be compromised if remote attestation has failed or was not performed - which is indicated by missing Vls. The presence of a VI - as these are held in volatile memory - is an indication that there has been effective interaction between the payment application and the CMS since the last boot of the mobile device operating environment and that remote attestation was performed successfully.

For assessing the implications of missing Vis - and therefore the lack of remote attestation - the context of the transaction and the connectivity of the mobile plays an important role.

There are a number of legitimate reasons why there may be missing Vls, such as the following:
- Consumer powering down of a device for long flight and upon reboot no connectivity is established
- Consumer powering down of a device overnight and reboot just before doing a transaction
- Battery low or dead and consumer is in a rural environment with no network coverage
- The application crashed only minutes before doing a transaction.

In all of these scenarios, it may be desirable to allow local transactions to take place, rather than simply barring all transactions until Vls have been obtained from the CMS. It is possible to mark such events by historical data points that can be stored for future reference, as shown in Table 4 below.

**Table 4**

| **Reason for reboot** | **Mobile historical data point** |
|---|---|
| Consumer powered down device | Shutdown detected |
| Battery was low or went dead | Battery low detected |
| Application crashed | Crash detected |

Other relevant data points that may provide useful information if captured at reboot or transaction time are the following:
- At reboot
   ∘ Flight mode is on
   ∘ Data Roaming is off and networks are different from the usual ones
   ∘ Distance since last boot > 1000 km
   ∘ No networks are detected
- At transaction time:
   ∘ Time since last reboot is very recent.

Such data points can be included as part of the authorization request and cross-referenced against data points received from the terminal. Exemplary scenarios are set out in Table 5 below.

**Table 5**

| **Scenario** | **Other mobile data points** | **Combination with Terminal data** |
|---|---|---|
| Long flight and upon reboot no connectivity is established | • Flight mode is on | • Terminal Country Code is different from Application Currency Code (→international transaction) |
| | • Data Roaming is off and networks are different from the usual ones | |
| | | Merchant Category Code is typical for no-connectivity situations (transit, hospital, etc) |
| | • Distance since last boot > 1000 km | |
| | | • Time between power-down and reboot matches distance between domestic country and new country code |
| Reboots just before doing a transaction | • Time since last reboot is very recent. | • Time of reboot is very close to terminal timestamp of transaction |
| Rural environment with no network | • No networks are detected. | • If we can pinpoint the terminal, we may build up historical data that |
| coverage | | corroborates lack of network. |
| | | • |

In embodiments, this information is sent as part of a new data object, nicknamed 'Card Assessment of the Device Status' and abbreviated as CADS.

An exemplary coding of these data points in CADS is provided below, containing three categories of information:
- Current status (B1)
- History (B2)
- Device Context (B3)

### B1 - Current status

| | |
|---|---|
| b8 | Flight mode is on/off |
| b7 | Telco networks are detected or not. |
| b6 | Telco networks are different from other telco networks that have been used for data roaming/connectivity |
| b5 | Data Roaming is on or off |
| b4 | Wifi networks are detected or not |
| b3 | Wifi networks are different from other wifi networks that have been used for data communication |
| b2 | RFU |
| b1 | RFU |

### B2 - History

| | |
|---|---|
| b8 | Consumer powered down device |
| b7 | Battery was low or went dead |
| b6 | Application crashed |
| b5 | RFU |
| b4 | RFU |
| b3 | RFU |
| b2 | RFU |
| b1 | RFU |

### B3 - Device Context

| | |
|---|---|
| b8 | Time since last reboot is less than 5 minutes |
| b7 | Distance since last boot > 1000 km |
| b5 | RFU |
| b4 | RFU |
| b3 | RFU |
| b2 | RFU |
| b1 | RFU |

This information can be transferred in appropriate data fields as part of transaction data. In current EMV implementations, this may require repurposing of an existing EMV data field to provide this data if existing free form fields provide insufficient space. For example, CADS information may be included by subversion of part of Issuer Application Data (IAD) of the DE55 field. CADS information may be used to modify the Universal Cardholder Authentication Field (UCAF^{™}) - UCAF has been developed as a standard by the applicant for use in collecting and transporting accountholder authentication data generated by issuer and accountholder security solutions.

**Table 6A - Issuer Application Data**

| **Data object** | **Size** |
|---|---|
| Key Derivation Index (KDI) | 1 |
| Cryptogram Version Number (CVN) | 1 |
| IAD Subversion - presence indicated by (specific values of) CVN | 1 |
| Other data - format indicated by IAD Subversion | var |

**Table 6B - 'Other data' for IAD subversion 0 and 1**

| **Data object** | **Size** | **IAD Subversion** | | |
|---|---|---|---|---|
| | | **0** | **1** | **2 to 255** |
| CDCVM Data | 2 | √ | √ | RFU |
| Additional Authentication Data Flags | 1 | √ | √ | |
| Transaction Context | 1 | | √ | |
| Card Assessment of the Device Status (CADS) | 3 | | √ | |
| Discretionary Data | var | opt | opt | |

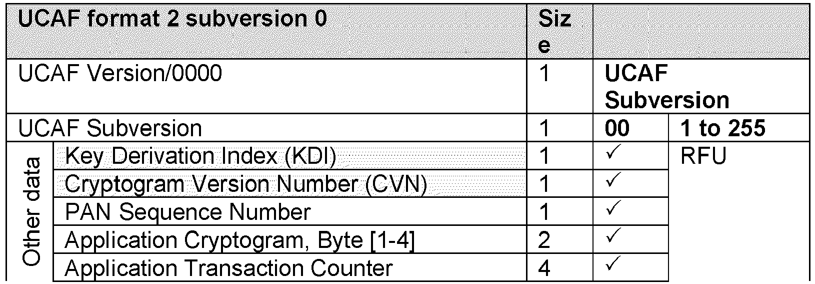

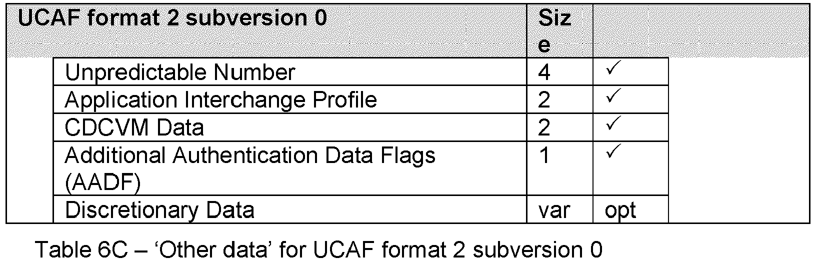

Transaction Context information as indicated in Table 6B above may include parts of existing Card Verification Results (CVR) information. An exemplary coding is provided in Table 7 below.

**Table 7 - Transaction Context**

| | **Meaning** | **CVR Equivalent** |
|---|---|---|
| b8 | RFU | |
| b7 | RFU | |
| b5 | CVM Requirements are not satisfied | B6b4 |
| b4 | Terminal delegates CDCVM to cardholder device | B4b1 |
| b3 | 1 = International Transaction | B4b3b2 |
| | 0 = Domestic Transaction | |
| b2 | 0 = AAC returned on First Generate AC | B1b6b5 |
| | 1 = ARQC returned on First Generate AC | |
| b1 | Combined DDA/AC Generation Returned In First | B2b7 |
| | Generate AC | |

As noted above, Consumer Device Cardholder Verification Method (CDCVM) is a customer verification method (CVM) used for applications running on mobile devices (or any other consumer computing device). In embodiments of the present arrangement, information relating to CDCVM may be provided in a transaction authorization request. Different approaches are taken for chip transactions and contactless magstripe transactions: cardholder verification method, strength and type are included through the (2 byte) CDCVM Information for chip transactions and in the CDCVM Codebook for contactless magstripe transactions. Coding is described in detail in Appendix B. Coding for CDCVM method, strength and type, and sources for the information applying to each are discussed below.

### Method - CDCVM Byte 2 b4b3b2b1 are set as follows,

| **b4** | **b 3** | **b 2** | **b1** | **Meaning** | | | | | |
|---|---|---|---|---|---|---|---|---|---|
| 0 | 0 | 0 | 0 | No CDCVM | If request for (KeyGuard controlled) cipher generates UserNotAuthentica tedException | | | AN D | If FingerprintManager.aut henticate generates callback to onAuthenticationError() |
| 0 | 0 | 1 | 0 | Fingerprint | If FingerprintManager.authenticate generates callback to onAuthenticationSucceeded() | | | | |
| 0 | 1 | 0 | 1 | Password | If request for (KeyGu ard controll ed) cipher does not throw an excepti on | AND | PASSWORD_QUALITY_COMP LEX OR | | |
| | | | | | | | PASSWORD_QUALITY_ALPHA NUMERIC | | |
| | | | | | | | PASSWORD_QUALITY_ALPHA BETIC | | |
| 0 | 1 | 1 | 0 | Pattern | | | PASSWORD_QUALITY_SOME THING | | |
| | | | | | | | PASSWORD_QUALITY_UNSP ECIFIED | | |
| 0 | 1 | 1 | 1 | PIN | | | PASSWORD_QUALITY_NUME | | |
| | | | | | | | RIC_COMPLEX | | |

These settings may be based on the checks supported by Android, as follows.

From: https://developer.android.com/reference/android/security/keystore/KeyGenParameterSpec.B uilder.html#setUserAuthenticationRequired(boolean)
The function "KeyGenParameterSpec.Builder setUserAuthenticationRequired (boolean required)" is added in API level 23.

If set to "yes", the key is authorized to be used only if the user has been authenticated. Note that by default a key can be used regardless of whether the user has been authenticated. When user authentication is required:
- The key can only be generated if secure lock screen is set up (see isDeviceSecure()). Additionally, if the key requires that user authentication takes place for every use of the key (see setUserAuthenticationValidityDurationSeconds(int)), at least one fingerprint must be enrolled (see hasEnrolledFingerprints()).
- The use of the key must be authorized by the user by authenticating to this Android device using a subset of their secure lock screen credentials such as a password/PIN/pattern or fingerprint.
- The key will become irreversibly invalidated once the secure lock screen is disabled (reconfigured to None, Swipe or other mode which does not authenticate the user) or when the secure lock screen is forcibly reset (e.g., by a Device Administrator). Additionally, if the key requires that user authentication takes place for every use of the key, it is also irreversibly invalidated once a new fingerprint is enrolled or once\ no more fingerprints are enrolled, unless setlnvalidatedByBiometricEnrollment(boolean) is used to allow validity after enrollment. Attempts to initialize cryptographic operations using such keys will throw KeyPermanentlylnvalidatedException.

In relation to strength, the DevicePolicyManager sets the policy on the quality of passwords - through the call setPasswordQuality(ComponentName, int) - and different constants are defined, as set out below.

If the application does not have device admin rights, it can still get information on the quality of the password. Some examples are given below:
- Int getPasswordMaximumLength(int quality), return the maximum password length that the device supports for a particular password quality.
- Int getPasswordMinimumLength(ComponentName admin), retrieves the current minimum password length for a particular admin or all admins that set restrictions on this user and its participating profiles.
- Int getPasswordMinimumNumeric(ComponentName admin), retrieves the current number of numerical digits required in the password for a particular admin or all admins that set restrictions on this user and its participating profiles.
- Int getPasswordQuality(ComponentName admin), retrieves the current minimum password quality for a particular admin or all admins that set restrictions on this user and its participating profiles.

Strength - CDCVM Byte 1 b6b5 are set as follows:

| **b6b5** | **Qualified as** | **Constant defined by Android** | **Meaning as defined by Android** |
|---|---|---|---|
| 11 | Strong | Int | The user must have entered a password containing at least a letter, a numerical digit and a special symbol, by default. |
| | | PASSWORD_QUALITY_COMPL EX | |
| | | Int | The user must have entered a password containing at least both> numeric and alphabetic (or other symbol) characters. |
| | | PASSWORD_QUALITY_ALPHA NUMERIC | |
| | | Int | The user must have entered a |
| | | PASSWORD_QUALITY_NUMER IC_COMPLEX | password containing at least numeric characters with no repeating (4444) or ordered (1234, 4321, 2468) sequences. |
| 10 | Medium | Int | The user must have entered a password containing at least alphabetic (or other symbol) characters |
| | | PASSWORD_QUALITY_ALPHA BETIC | |
| | | Int | The user must have entered a password containing at least numeric characters. |
| | | PASSWORD_QUALITY_NUMER IC | |
| 01 | Weak | Int | The policy allows for low-security biometric recognition technology. |
| | | PASSWORD_QUALITY_BIOMET RIC_WEAK | |
| | | Int | The policy requires some kind of password or pattern, but doesn't care what it is. |
| | | PASSWORD_QUALITY_SOMET HING | |
| 00 | No rating defined | Int | The policy has no requirements for the password. |
| | | PASSWORD_QUALITY_UNSPE CIFIED | |

Type - CDCVM Byte 1, b4b3 are set as follows:

| **b 4** | **b 3** | **Type of CDCVM** | | | |
|---|---|---|---|---|---|
| 0 | 1 | Persiste nt | If ActualKe y.isUserA uthentica tionRequi red() == true | AND | If |
| | | | | | Actual Key.isUserAuthenticationValidW hileOnBody() == true |
| 1 | 0 | Prolonge d | | | If |
| | | | | | ActualKey.getUserAuthenticationValidit yDurationSeconds() between 30 seconds and 2 minutes. |
| 1 | 1 | Instant | | | If |
| | | | | | Actual Key .getUser AuthenticationValidit yDurationSeconds() between 0 and 30. |
| 0 | 0 | Un know n | All other cases. | | |

Type relates to whether authentication is persistent, prolonged or instant. Information obtainable through Android is set out at https://developer.android.com/training/articles/keystore.html#UserAuthentication. When a key is authorized to be used only if the user has been authenticated, it is configured to operate in one of the two modes:
- User authentication authorizes the use of keys for a duration of time. All keys in this mode are authorized for use as soon as the user unlocks the secure lock screen or confirms their secure lock screen credential using the KeyguardManager.createConfirmDeviceCredentialIntent flow. The duration for which the authorization remains valid is specific to each key, as specified using setUserAuthenticationValidityDurationSeconds during key generation or import.
- User authentication authorizes a specific cryptographic operation associated with one key. In this mode, each operation involving such a key must be individually authorized by the user. Currently, the only means of such authorization is fingerprint authentication: FingerprintManager.authenticate.

Whilst various exemplary embodiments of the disclosed system and method have been described above it should be understood that they have been presented for purposes of example only, and should not be taken to be limitations. The above description is not exhaustive and does not limit the disclosure to the precise form disclosed. Modifications and variations are possible in light of the above teachings or may be acquired from practicing of the disclosure, without departing from scope of the appended claims.

### Appendix A - Exemplary Key Exchange and Key Injection Code

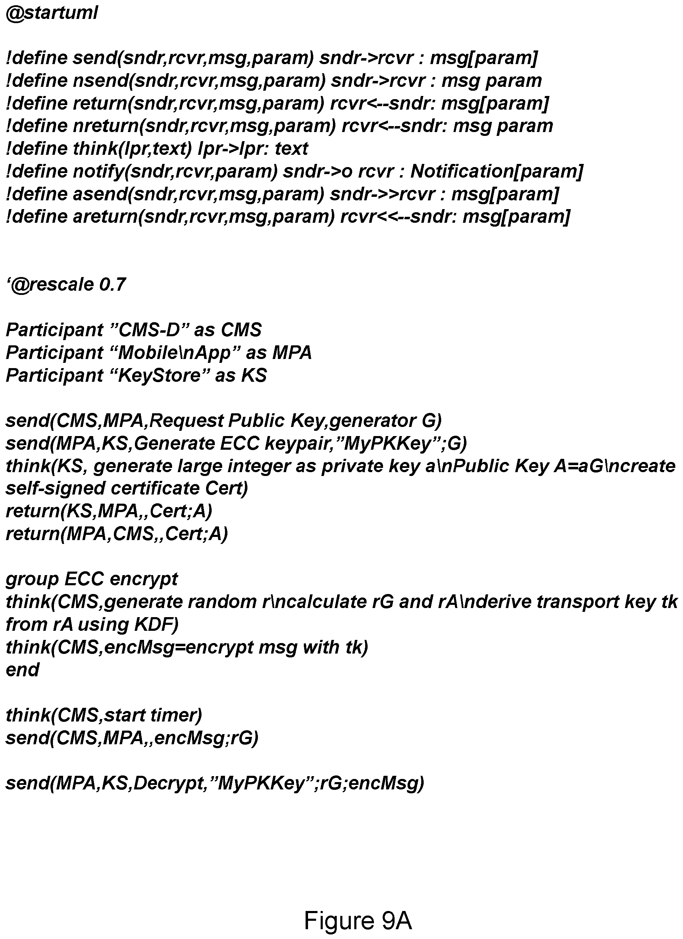

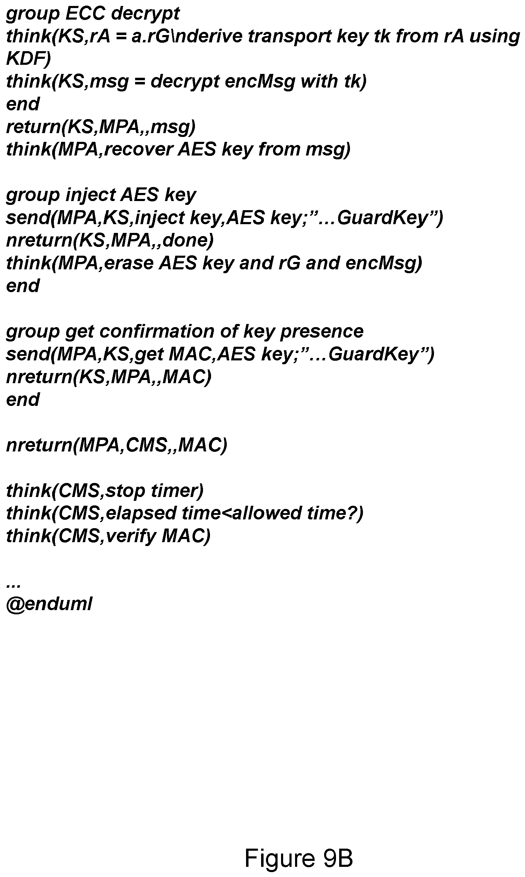

Figures 9A and 9B together illustrate exemplary key exchange and key injection code for use in embodiments. As indicated above, Figure 7 illustrates an associated message flow.

### Appendix B - CDCVM Information and CDCVM Codebook

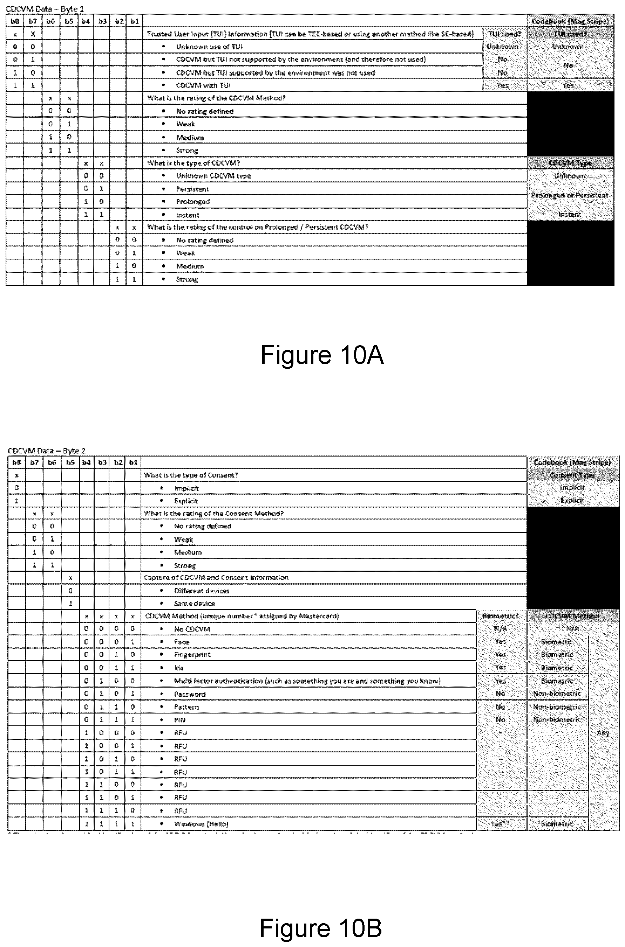

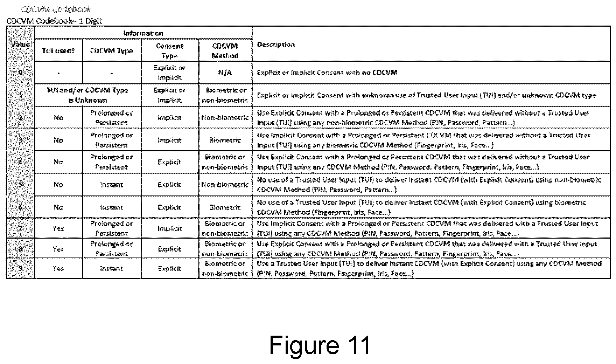

This section describes the layout of the CDCVM Information and CDCVM Codebook. For M/Chip (DE55 or UCAF), the information to be populated is indicated in Figures 10A and 10B. For MagStripe, the information to be populated is indicated in Figure 11.

### Appendix C - System State Awareness

Information on the network connectivity is retrieved from the Android ConnectivityManager and Setting. The primary responsibilities of the ConnectivityManager are to:
- Monitor network connections (Wi-Fi, GPRS, UMTS, etc.)
- Send broadcast intents when network connectivity changes
- Attempt to "fail over" to another network when connectivity to a network is lost
- Provide an API that allows applications to query the coarse-grained or fine-grained state of the available networks
- Provide an API that allows applications to request and select networks for their data traffic

Particularly relevant is the information applying to internet capable networks (NetworkCapabilities NET_CAPABILITY_INTERNET) and the response received on a request for such network. Another topic of interest is Settings, as this allows an application to detect that flight mode is on.

This Appendix sets out Android functions for obtaining relevant state information.

### Settings

| | | |
|---|---|---|
| Flight mode | : | Settings.System.getInt(context.getContentResolver(), |
| | | Settings.System.AlRPLANE_MODE_ON, 0) |
| Network Roamin | : | TelephonyManager.isNetworkRoaming() |
| 9 | | |
| Data Roamin 9 | : | Settings.Secure.getInt(getContentResolver(), |
| | | Settings.Secure.DATA_ROAMING) |
| Wifi: | : | WifiManager mng = (WifiManager) |
| | | getSystemService(Context.WIFI_SERVICE); |
| | | mnq.isWifiEnabled(); |

### Available networks

| | | |
|---|---|---|
| Telco network s | : | ConnectivityManager connectivity = |
| | | (ConnectivityManager) |
| | | _context.getSystemService(Context.CONNECTIVITY_SERVICE); |
| | | if (connectivity != null) { |
| | | NetworkInfo[] networkInfo = connectivity.getAllNetworkInfo(); |
| | | } |
| Wifi network s | : | mWifiManager = (WifiManager) |
| | | getSystemService(Context.WIFI_SERVICE); |
| | | registerReceiver(mWifiScanReceiver, |
| | | new |
| | | IntentFilter(WifiManager.SCAN_RESULTS AVAILABLE ACTION)); |
| | | mWifiManager.startScan(); |
| | | private final BroadcastReceiver mWifiScanReceiver = new |
| | | BroadcastReceiver() { |
| | | @Override |
| | | public void onReceive(Context c, Intent intent) { |
| | | if |
| | | (intent.getAction().equals(WifiManager.SCAN_RESULTS_AVAILABLE_A |
| | | CTION)) { |
| | | List<ScanResult> mScanResults = |
| | | mWifiManager.getScanResults(); ... }}} |

### Connected networks

| | | |
|---|---|---|
| Telco network | : | if (networkInfo.getState() == Networklnfo.State.CONNECTED) |
| Wifi network | : | String desiredMacAddress = "router mac address"; |
| | | Wi fiManager wifiManager = (WifiManager) |
| | | context.getSystemService(Context.WIFI_SERVICE); |
| | | Wifilnfo wifi = wifiManager.getConnectionInfo(); |
| | | if (wifi != null) { |
| | | // get current router Mac address |
| | | String bssid = wifi.getBSSID(); |
| | | connected = desiredMacAddress.equals(bssid); |
| | | } |

### Distance

```
 <uses-permission android:name="android.permission.ACCESS_FINE_LOCATION" />
 <uses-feature android:name="android.hardware.location.gps" />
 // Acquire a reference to the system Location Manager
 LocationManager location Manager = (LocationManager)
 this.getSystemService(Context. LOCATION_SERVICE);
 // Define a listener that responds to location updates
 LocationListener location Listener = new LocationListener() {
  public void onLocationChanged(Location newLocation) {
   // Called when a new location is found by the network location provider.
      location.getLongitude();
      location.getLatitude();
   //now compare against old location to get distance } };
   // Register the listener with the Location Manager to receive location updates
   locationManager.requestLocationUpdates(LocationManager.NETWORK_PROVIDER, 0, 0,
   locationListener);
```

### Reasons for reboot

| | |
|---|---|
| Battery is getting low | <receiver android: name=". BatteryLowReceiver" |
| | <intent-filter> |
| | <action android:name=" |
| | "android.intent.action.BATTERY_LOW" /> |
| | </intent-filter> |
| | </receiver> |
| | public class BatteryLowReceiver extends BroadcastReceiver |
| | { |
| | @Override |
| | public void onReceive(Context context, Intent intent) {} |
| | } |
| User powers down device | <receiver android: name=".ShutdownReceiver"> |
| | <intent-filter> |
| | <action |
| | android: name="android.intent.action.ACTION_SH UTDOWN" /> |
| | <action |
| | android:name="android.intent.action.QUICKBOOT _ POWEROFF" /> |
| | </intent-filter> </receiver> |
| | public class Shutdown Receiver extends BroadcastReceiver |
| | { |
| | @Override |
| | public void onReceive(Context context, Intent intent) {} |
| | } |
| Phone crashed | Locate app crash logs and check the date |
| | Application Not Responsive: stack of related process at |
| | /data/anr/traces.txt |
| | Application crashs: stack of crashed application under |
| | /data/tombstones directory. |
| | Assume that the application will crash and set flag 'bCrashed'in |
| | Shared Preference to true at onCreate. Reset the flag to false |
| | onDestroy when the user leaves the app or shuts down the system - |
| | basically normal closure. If the app got closed without going through |
| | these steps, it means it crashed. |
| | public void savePreferences(boolean value) { |
| | SharedPreferences shared Preferences = PreferenceManager. |
| | getDefaultSharedPreferences(this); |
| | Editor editor = sharedPreferences.edit(); |
| | editor.putBoolean("ApplicationCrashed", value); |
| | editor.commit(); |
| | } |
| Operating system was upgraded and required a reboot | android.os.Build.VERSION.SDK_INT > recorded version |

### Timings

- Time (in milliseconds) since last reboot: SystemClock.elapsedRealtime()
- Time (in milliseconds) at shutdown: System.currentTimeMillis()
- Time (in milliseconds) at reboot: System.currentTimeMillis()

## Claims

1. A computing device employing a security architecture for use in a payment application, the security architecture comprising using non-volatile storage of the computing device for storing first cryptographic material and using volatile storage (51) of the computing device for storing second cryptographic material:
wherein the non-volatile storage comprises keystores (43) provided by an operating system (41) of the computing device, and the first cryptographic material comprises cryptographic keys; wherein the second cryptographic material comprises encrypted volatile integers generated for one time use; wherein the second cryptographic material is lost on rebooting of the computing device and the computing device is adapted to request one or more volatile integers on reboot of the device; and
wherein the payment application is adapted to generate an application cryptogram for a transaction performed using the computing device, wherein the first cryptographic material is used in generation of the application cryptogram and a volatile integer of said volatile integers is also used in generation of the application cryptogram if one is available, wherein on receipt of the application cryptogram it can be determined whether a volatile integer was used in generation of the application cryptogram.

2. The computing device of claim 1, wherein the security architecture is adapted such that the computing device is adapted to receive the volatile integers from a source external to the computing device when accessible to the computing device over a computing network.

3. The computing device of any preceding claim, wherein the cryptographic keys comprise one or more of one or more single use keys and a long term use key.

4. The computing device of claim 3, wherein when generating an application cryptogram using first cryptographic material, the payment application uses one of the single use keys, if available, and the long term use key if no single use key is available, and wherein when a long term use key is used in generating the application cryptogram, the application cryptogram indicates that the long term use key was used.

5. The computing device of any preceding claim, wherein the security architecture is adapted to use cryptographic keys only when injection into the keystores (43) was completed within a predetermined time.

6. The computing device of any preceding claim, wherein the computing device is a mobile computing device.

7. The computing device of claim 6, wherein the security architecture provides for verification of a user at the mobile computing device, and wherein at least a part of the first cryptographic material is stored in keystores (43) that can only be accessed after successful verification of the user.

8. A method of preparing and performing a payment application on a computing device having non-volatile storage and volatile storage (51), the method comprising:
storing first cryptographic material in the non-volatile storage and storing second cryptographic material in the volatile storage (51), wherein the non-volatile storage comprises keystores (43) provided by an operating system (41) of the computing device and the first cryptographic material comprises cryptographic keys, wherein the second cryptographic material comprises encrypted volatile integers generated for one time use, and wherein the second cryptographic material is lost on rebooting of the computing device and the computing device is adapted to request one or more volatile integers on reboot of the device;
receiving at the computing device at least the second cryptographic material from a source external to the computing device when accessible by a computing network; and
the payment application generating an application cryptogram for a transaction performed using the computing device, wherein the first cryptographic material is used in generation of the application cryptogram and a volatile integer of said volatile integers is also used in generation of the application cryptogram if one is available, wherein on receipt of the application cryptogram it can be determined whether a volatile integer was used in generation of the application cryptogram.

9. The method of claim 8 further comprising verifying a user at the mobile computing device, wherein at least a part of the first cryptographic material is stored in keystores (43) that can only be accessed after successful verification of the user.

## Patentansprüche

1. Eine Rechenvorrichtung, die eine Sicherheitsarchitektur zur Verwendung in einer Zahlungsanwendung einsetzt, wobei die Sicherheitsarchitektur die Verwendung eines nicht flüchtigen Speichers der Rechenvorrichtung zum Speichern eines ersten kryptografischen Materials und die Verwendung eines flüchtigen Speichers (51) der Rechenvorrichtung zum Speichern eines zweiten kryptografischen Materials umfasst,
wobei der nicht flüchtige Speicher Schlüsselspeicher (43) umfasst, die von einem Betriebssystem (41) der Rechenvorrichtung bereitgestellt werden, und das erste kryptografische Material kryptografische Schlüssel umfasst, wobei das zweite kryptografische Material verschlüsselte flüchtige Ganzzahlen umfasst, die zur einmaligen Verwendung generiert werden, wobei das zweite kryptografische Material beim Neustart der Rechenvorrichtung verloren geht und die Rechenvorrichtung angepasst ist, um eine oder mehrere flüchtige Ganzzahlen beim Neustart der Vorrichtung anzufordern; und
wobei die Zahlungsanwendung angepasst ist, um ein Anwendungskryptogramm für eine Transaktion zu generieren, die unter Verwendung der Rechenvorrichtung durchgeführt wird, wobei das erste kryptografische Material bei der Generierung des Anwendungskryptogramms verwendet wird und eine flüchtige Ganzzahl der genannten flüchtigen Ganzzahlen ebenfalls bei der Generierung des Anwendungskryptogramms verwendet wird, falls eine verfügbar ist, wobei bei Empfang des Anwendungskryptogramms bestimmt werden kann, ob eine flüchtige Ganzzahl bei der Generierung des Anwendungskryptogramms verwendet wurde.

2. Die Rechenvorrichtung nach Anspruch 1, wobei die Sicherheitsarchitektur so angepasst ist, dass die Rechenvorrichtung angepasst ist, um die flüchtigen Ganzzahlen von einer Quelle außerhalb der Rechenvorrichtung zu empfangen, wenn sie für die Rechenvorrichtung über ein Rechennetzwerk zugreifbar ist.

3. Die Rechenvorrichtung nach einem vorhergehenden Anspruch, wobei die kryptografischen Schlüssel einen oder mehrere von einem oder mehreren Einmalverwendungsschlüsseln und einen Langzeitverwendungsschlüssel umfassen.

4. Die Rechenvorrichtung nach Anspruch 3, wobei, wenn ein Anwendungskryptogramm unter Verwendung eines ersten kryptografischen Materials generiert wird, die Zahlungsanwendung einen der Einmalverwendungsschlüssel verwendet, falls verfügbar, und den Langzeitverwendungsschlüssel, falls kein Einmalverwendungsschlüssel verfügbar ist, und wobei, wenn ein Langzeitverwendungsschlüssel beim Generieren des Anwendungskryptogramms verwendet wird, das Anwendungskryptogramm angibt, dass der Langzeitverwendungsschlüssel verwendet wurde.

5. Die Rechenvorrichtung nach einem vorhergehenden Anspruch, wobei die Sicherheitsarchitektur angepasst ist, um kryptografische Schlüssel nur zu verwenden, wenn die Einspeisung in die Schlüsselspeicher (43) innerhalb einer vorbestimmten Zeit abgeschlossen wurde.

6. Die Rechenvorrichtung nach einem vorhergehenden Anspruch, wobei die Rechenvorrichtung eine mobile Rechenvorrichtung ist.

7. Die Rechenvorrichtung nach Anspruch 6, wobei die Sicherheitsarchitektur für die Überprüfung eines Benutzers an der mobilen Rechenvorrichtung sorgt, und wobei mindestens ein Teil des ersten kryptografischen Materials in Schlüsselspeichern (43) gespeichert wird, auf die nur nach erfolgreicher Überprüfung des Benutzers zugegriffen werden kann.

8. Ein Verfahren zum Vorbereiten und Durchführen einer Zahlungsanwendung einer Rechenanwendung, die einen nicht flüchtigen Speicher und einen flüchtigen Speicher (51) aufweist, wobei das Verfahren Folgendes umfasst:
Speichern eines ersten kryptografischen Materials in dem nicht flüchtigen Speicher und Speichern eines zweiten kryptografischen Materials in dem flüchtigen Speicher (51), wobei der nicht flüchtige Speicher Schlüsselspeicher (43) umfasst, die von einem Betriebssystem (41) der Rechenvorrichtung bereitgestellt werden, und das erste kryptografische Material kryptografische Schlüssel umfasst, und wobei das zweite kryptografische Material verschlüsselte flüchtige Ganzzahlen umfasst, die zur einmaligen Verwendung generiert werden, wobei das zweite kryptografische Material beim Neustart der Rechenvorrichtung verloren geht und die Rechenvorrichtung angepasst ist, um eine oder mehrere flüchtige Ganzzahlen beim Neustart der Vorrichtung anzufordern;
Empfangen, an der Rechenvorrichtung, von mindestens dem zweiten kryptografischen Material von einer Quelle außerhalb der Rechenvorrichtung, wenn diese durch ein Rechennetzwerk zugreifbar ist, und
Generieren, durch die Zahlungsanwendung, eines Anwendungskryptogramms für eine Transaktion, die unter Verwendung der Rechenvorrichtung durchgeführt wird, wobei das erste kryptografische Material bei der Generierung des Anwendungskryptogramms verwendet wird und eine flüchtige Ganzzahl der genannten flüchtigen Ganzzahlen ebenfalls bei der Generierung des Anwendungskryptogramms verwendet wird, falls eine verfügbar ist, wobei bei Empfang des Anwendungskryptogramms bestimmt werden kann, ob eine flüchtige Ganzzahl bei der Generierung des Anwendungskryptogramms verwendet wurde.

9. Das Verfahren nach Anspruch 8, das ferner das Überprüfen eines Benutzers an der mobilen Rechenvorrichtung umfasst, wobei mindestens ein Teil des ersten kryptografischen Materials in Schlüsselspeichern (43) gespeichert wird, auf die nur nach erfolgreicher Überprüfung des Benutzers zugegriffen werden kann.

## Revendications

1. Dispositif informatique employant une architecture de sécurité destinée à être utilisée dans une application de paiement, l'architecture de sécurité comprenant l'utilisation d'une mémoire non volatile du dispositif informatique pour stocker des premières informations cryptographiques et l'utilisation d'une mémoire volatile (51) du dispositif informatique pour stocker des secondes informations cryptographiques :
dans lequel la mémoire non volatile comprend des mémoires de clés (43) fournies par un système d'exploitation (41) du dispositif informatique, et les premières informations cryptographiques comprennent des clés cryptographiques ; dans lequel les secondes informations cryptographiques comprennent des entiers volatils cryptés générés pour un usage unique ; dans lequel les secondes informations cryptographiques sont perdues lors d'un réamorçage du dispositif informatique et le dispositif informatique est conçu pour demander un ou plusieurs entiers volatils au réamorçage du dispositif; et
dans lequel l'application de paiement est conçue pour générer un cryptogramme d'application pour une transaction réalisée à l'aide du dispositif informatique, dans lequel les premières informations cryptographiques sont utilisées dans la génération du cryptogramme d'application et un entier volatil desdits entiers volatils, s'il en existe un, est également utilisé dans la génération du cryptogramme d'application, dans lequel à la réception du cryptogramme d'application, il peut être déterminé qu'un entier volatile a ou non été utilisé dans la génération du cryptogramme d'application.

2. Dispositif informatique selon la revendication 1, dans lequel l'architecture de sécurité est conçue de telle sorte que le dispositif informatique soit en mesure de recevoir les entiers volatils à partir d'une source externe au dispositif informatique lorsqu'elle est accessible au dispositif informatique sur un réseau informatique.

3. Dispositif informatique selon l'une quelconque des revendications précédentes, dans lequel les clés cryptographiques comprennent une ou plusieurs d'une ou plusieurs clés à usage unique et d'une clé d'utilisation à long terme.

4. Dispositif informatique selon la revendication 3, dans lequel, lors de la génération d'un cryptogramme d'application à l'aide des premières informations cryptographiques, l'application de paiement utilise une des clés à usage unique, si elles existent, et la clé d'utilisation à long terme si aucune clé à usage unique n'existe, et dans lequel lorsqu'une clé d'utilisation à long terme est utilisée pour générer le cryptogramme d'application, le cryptogramme d'application indique que la clé d'utilisation à long terme a été utilisée.

5. Dispositif informatique selon n'importe quelle revendication précédente, dans lequel l'architecture de sécurité est conçue pour utiliser des clés cryptographiques uniquement lorsqu'une injection dans les mémoires de clés (43) a été réalisée dans un délai prédéterminé.

6. Dispositif informatique selon n'importe quelle revendication précédente, le dispositif informatique étant un dispositif informatique mobile.

7. Dispositif informatique selon la revendication 6, dans lequel l'architecture de sécurité permet la vérification d'un utilisateur au niveau du dispositif informatique mobile, et dans lequel au moins une partie des premières informations cryptographiques est stockée dans des mémoires de clés (43) dont l'accès n'est possible qu'après vérification réussie de l'utilisateur.

8. Procédé de préparation et de réalisation d'une application de paiement sur un dispositif informatique doté d'une mémoire non volatile et d'une mémoire volatile (51), le procédé comprenant :
le stockage de premières informations cryptographiques dans la mémoire non volatile et le stockage de secondes informations cryptographiques dans la mémoire volatile (51), dans lequel la mémoire non volatile comprend des mémoires de clés (43) fournies par un système d'exploitation (41) du dispositif informatique et les premières informations cryptographiques comprennent des clés cryptographiques, dans lequel les secondes informations cryptographiques comprennent des entiers volatils cryptés générés pour un usage unique, et dans lequel les secondes informations cryptographiques sont perdues lors d'un réamorçage du dispositif informatique et le dispositif informatique est conçu pour demander un ou plusieurs entiers volatils au réamorçage du dispositif ;
la réception au niveau du dispositif informatique au moins des secondes informations cryptographiques à partir d'une source externe au dispositif informatique lorsqu'elle est accessible par un réseau informatique ; et
la génération par l'application de paiement d'un cryptogramme d'application pour une transaction réalisée à l'aide du dispositif informatique, dans lequel les premières informations cryptographiques sont utilisées dans la génération du cryptogramme d'application et un entier volatil desdits entiers volatils, s'il en existe un, est également utilisé dans la génération du cryptogramme d'application, dans lequel à la réception du cryptogramme d'application, il peut être déterminé qu'un entier volatil a été utilisé ou non dans la génération du cryptogramme d'application.

9. Procédé selon la revendication 8 comprenant en outre la vérification d'un utilisateur au niveau du dispositif informatique mobile, dans lequel au moins une partie des premières informations cryptographiques est stockée dans des mémoires de clés (43) dont l'accès n'est possible qu'après vérification réussie de l'utilisateur.
